Europäisches Patentamt

European Patent Office

Office européen des brevets

(11) Publication number: **0 220 724 B1**

## EUROPEAN PATENT SPECIFICATION

(45) Date of publication of patent specification: **13.05.92**  (51) Int. Cl.⁵: **G11B 23/50**

(21) Application number: **86115022.5**

(22) Date of filing: **29.10.86**

---

(54) **Optical disc player equipped with a cleaning device for cleaning the surface of the optical disc.**

---

(30) Priority: **30.10.85 JP 242399/85**

(43) Date of publication of application:
**06.05.87 Bulletin 87/19**

(45) Publication of the grant of the patent:
**13.05.92 Bulletin 92/20**

(84) Designated Contracting States:
**DE FR GB NL**

(56) References cited:
| | |
|---|---|
| BE-A- 678 979 | US-A- 1 503 058 |
| US-A- 2 288 242 | US-A- 2 294 660 |
| US-A- 2 373 960 | US-A- 4 446 547 |
| US-A- 4 519 059 | |

(73) Proprietor: **DAICEL CHEMICAL INDUSTRIES, LTD.**
**No. 1-Banchi, Teppo-cho**
**Sakai-shi Osaka-fu 590(JP)**

(72) Inventor: **Funaki, Yoshinori**
**940, Shinzaike Aboshi-ku**
**Himeji-shi Hyogo-ken(JP)**

(74) Representative: **Boeters, Hans Dietrich, Dr. et al**
**Boeters & Bauer Bereiteranger 15**
**W-8000 München 90(DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

The invention concerns an optical disc player according to the preamble or claim 1

Since the optical discs such as CD, CD-ROM, DRAW and E-DRAW have been adapted to read and/or write recording bits on a magnet-optical recording layer by way of a transparent substrate in a reflection or transmission mode, they have a merit capable of reading or writing while utilizing the difference in the focal depth with no effects from dusts or the likes deposited on the transparent substrate, whereby the life of the media is nearly permanent different from the case of contact type media as in conventional hard discs or floppy discs.

In this way, although the optical disc is theoretically free from the effects of dusts or the likes, it is naturally desirable to avoid the deposition of the dusts or the likes on the optical disc as much as possible. That is, if the optical disc once deposited with dusts or the likes by static electricity or like other cause is left as it is, such dusts or the likes are firmly secured to the surface of the optical disc by means of humidity in air, trace of finger prints or like other reactive substances, around which larger dusts or the likes are accumulated and deposited and finally making it impossible to effectively utilize the basic merit of the optical disc capable of defocusing the dusts or the likes at the surface of the optical disc by utilizing the difference in the focal depth (refer to Japanese Patent Publication No. 32931/1977). Accordingly, it is desirable to remove the dusts or the likes on the surface of the optical disc as rapidly as possible.

Heretofore, so-called disc cleaners or CD cleaners have been commercialized for removing dusts or the likes on the surface of the optical disc. However, in the case that the surface of the optical disc is wiped with a tool attached or planted with wool or like other fibers, fine scratches are resulted to the surface of the optical disc made of plastics such as polycarbonate and PMMA and, accordingly, this causes a reading error due to the scattering of light. Further, when cleaning the surface of the optical disc with the chemicals generally used , those materials are mainly composed of a surface active agent which have only a temporary effect and are highly expensive as well.

From US-A4519059 an optical disc player using a cleaning pad for cleaning the optical disc is known.

US-A-2294660 discloses the use of lamb wool for removing dust particles from the surface of a phonograph record.

Accordingly, it is an object of this invention to provide an optical discplayer equipped with a cleaning device designed to remove obstacles such as dusts or the likes deposited on the surface of an optical disc without injuring the optical disc and preventing the dusts or the likes from depositing on the surface of the optical disc.

A particular object of this invention is to provide a cleaning material designed to remove dust of the like from the surface of the optical disc without using special cleaner device or chemicals and without injuring the surface of the optical disc at all.

These problems are solved by the teaching contained in claim 1.

fig. 1      shows an explanatory view for describing the determination of a compression resiliency of a fluffy cleaning material,

fig. 2      shows a schematic view of an optical discplayer equipped with a cleaning device and

fig. 3      shows a schematic view of different examples of plumes secured to supports.

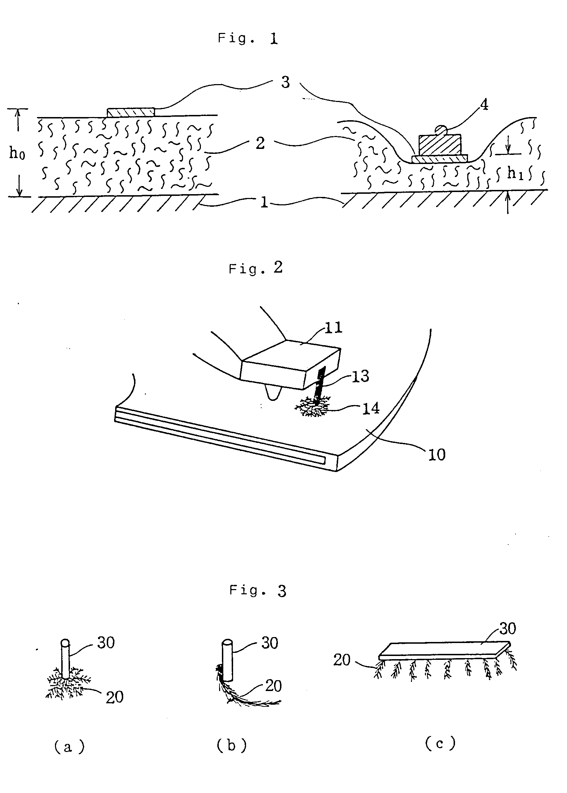

To clean the surface of an optical high density information recording carrier 10 as shown in fig 1, the surface of the recording carrier 10 and a fluffy material 14 will be moved relative to each other while bringing the fluffy material 14 in contact with the surface of the carrier 10.

The optical high density information recording carrier includes any of optical recording media such as so-called optical discs, that is, ROM such as compact disc and laser disc, each type of discs such as DRAW and E-DRAW, as well as optical cards, light recording tapes and the likes. The present inventors have measured the cleaning effect for the surface of optical discs using various fluffy material and found that although obstacles thereon can be removed to some extent by using any of fluffy material, most of the materials give scratches to the surface of the optical disc. In view of the above, the present inventors have continued to look for the fluffy material that would not injure the surface of the optical disc and, as a result, have found that the compression resiliency is one of the important factors. That is, when both of the optical disc and the fluffy material are moved relative to each other while bringing them into contact, it has been found that the compression resiliency is the optimal factor for representing the overall performance of the fluffy material, although there are various other factors for avoiding the scratches on the optical discs such as friction coefficient, rigidity, size and configuration.

The compression resiliency was measured as described below : At first, fluffy material of a predetermined thickness was placed with a sufficient area of contact (for example, 400 cm$^2$) on a flat substrate 1 as shown on the left of Figure 1, an acrylic plate 3 (2 g) of 4 cm diameter was gently placed at the center thereof and the height $h_0$ of the fluffy material 2 including that of the disc 3 was measured. Then, a load 4 of 200 g was gently placed thereon as shown on the light of Figure 1, and the height $h_1$ of the fluffy material after standing still for 5 minutes was measured The compression resiliency was then determined by the following equation :

$$\text{Compression resiliency (P)} = \frac{h_0 - h_1}{h_0} \times 100\%$$

The present inventors have made various experiments on the relationship between the compression resiliency (P) and the frequency of generating scratches on the surface of the optical disc for various fluffy materials and, as a result, found that the surface of the optical disc is injured if the compression resiliency is less than 40 %.

As a fluffy material having the compression resiliency of greater than 40 % plumes of birds are particularly preferable but selection may also be made to various natural fibers, for example, animal fibers such as of animal furs, plant fibers such as of seed fluffs as well as artificial fibers such as regenerated fibers, semi-synthetic fibers and synthetic fibers

The plumes of birds as the most preferred fluffy material are variations of skins having been changed in the course of evolution and they are divided into so-called feathers and downs. Feathers comprise rhachis having a soft barbes on both sides thereof and, further, smaller barbes attached on the right and left thereof. Downs comprise central rhachis, fine barbes radially extended therefrom and, further, smaller barbes branched from the right and left thereof.

Preferably any feathers and downs may be used. Plumes have the merit of not injuring the disc, as well as a function of retaining dusts between barbes, a merit of giving less effects to optical discs, pick-ups and the likes, vibration absorbing effects and, further, a function of maintaining the configuration of the brush for a long period of time. Figure 2 shows one embodiment of a cleaning device secured to a pick-up, in which a rod 13 secured with plumes 14 is fixed to an optical pick-up 11, so that the surface of an optical disc 10 is cleaned with the plumes 14 when the optical disc 10 and the optical pick-up 11 move relative to each other.

Plumes 20 are secured to the support means 30 as is shown in fig. 3, (a) by means of securing the rhachis, or center rhachis radially with adhesives, (b) by means of securing the rhachis on one or both sides, (c) by means of planting them in rows, etc. wherein (a) and (b) can be applied to the optical pick-up and (c) can be applied to the disc insertion port of the optical disc device, hand cleaner, power-driven cleaner, etc.

This invention will now be described while referring to examples.

(Example)

Compression resiliency (P) as defined above was measured for four types of materials, that is, polyester fibers, wools, plumes and cotton used as "bedding cotton". Then, they were secured to the top end of a wooden rod of 3 mm diameter with adhesives in the state as shown in Figure 3(a) and the optical disc is rotated at 1800 rpm while bringing each of the wads slightly into contact with the optical disc, to thereby examine the scratches resulted on the surface of the optical disc with naked eyes and a microscope. Table 1 shows the results.

As can be seen from the Table, scratches to the optical disc can be prevented during sliding movement for a long period of time in the case where the compression resiliency (P) is greater than 40 %.

Table 1

| Types of wads | Compression resiliency (P) | Scratches on the surface of optical disc (1) | | | |
|---|---|---|---|---|---|
| | | Rotation time (min) | | | |
| | | 1 min | 1 0 min | 1 hour | 5 hour |
| Polyester wads A | 2 0 | × | × × | × × | × × |
| " B | 1 5 | × | × × | × × | × × |
| Wool wad | 3 0 | × | × × | × × | × × |
| Feather | 4 0 | ○ | ○ | ○ | ○ |
| Down | 6 0 | ○ | ○ | ○ | ○ |
| Cotton | 1 0 | × × | × × | × × | × × |

Remarks : (1) References in the table means :

xx ....scratches observed by naked eyes resulted

x ... scratches observed by microscope (x 100) resulted

o ... no scratches resulted even under microscopic observation (x100)

## Claims

1. An optical disc player equipped with a cleaning device for automatically cleaning an inserted optical disc (10) by using a cleaning material (14, 20) in contact with a surface of said optical disc (10) charactarized in that said cleaning material comprises a fluffy material (2, 14, 20) whose compression resiliency

$$P= \frac{ho - hl}{ho} \times 100 \ \%$$

is higher than 40 %,
wherein (ho) is the height of the fluffy material supported on a flat substrate in the absence of a load and (h1) is the height of the fluffy material (2) after a load of 200 g is placed on a plate (3) of 4 cm diameter onto the fluffy material (2).

4

**2.** An optical disc player according to Claim 1 characterized in that said fluffy material (2) is made of feather (20).

**3.** An optical disc player according to Claim 1 or 2 characterized in that said cleaning device comprises a support (30) on which said fluffy material (2) is secured.

**4.** An optical disc player according to Claim 3 characterized in that said support (30) is attached to a pick-up assembly (11) of said player.

**Revendications**

**1.** Lecteur de disques optiques équipé d'un dispositif pour assurer le nettoyage automatique d'un disque optique (10) en place, à l'aide d'un matériau de nettoyage (14, 20) en contact avec la surface dudit disque optique (10), caractérisé en ce que ledit matériau de nettoyage comprend une matière duveteuse (2, 14, 20) dont la résistance à la compression

$$P = \frac{ho - h1}{ho} \times 100 \ \%$$

est supérieure à 40 %, (h0) étant la hauteur du matériau duveteux sur un substrat plat en l'absence d'une charge et (h1) la hauteur de la matière duveteuse (2) losqu'une charge de 200 g est placée sur un plateau (3) de 4 cm de diamètre posé sur la matière duveteuse (2).

**2.** Lecteur de disques optiques selon la revendication 1, caractérisé en ce que ladite matière duveteuse (2) est faite à partir de plumes (20).

**3.** Lecteur de disques optiques selon la revendication 1 ou 2, caractérisé en ce que ledit dispositif de nettoyage comprend un support (30) sur lequel est fixée ladite matière duveteuse (2).

**4.** Lecteur de disques optiques selon la revendication 3, caractérisé en ce que ledit support (30) est fixé à l'ensemble de lecture (11) dudit lecteur.

**Patentansprüche**

**1.** Spieler für optische Platten mit einer Reinigungsvorrichtung zum automatischen Reinigen einer eingesetzten optischen Platte (10) unter Verwendung eines Reinigungsmaterials (14, 20) in Berührung mit der Oberfläche der optischen Platten (10), dadurch *gekennzeichnet*, daß das Reinigungsmaterial ein flaumiges Material (2, 14, 20) umfaßt, dessen Kompressionswiderstand P = (h0 - h1) x 100 % / h0 mehr als 40 % beträgt, wobei (h0) die Höhe des flaumigen Materials auf einem flachen Substrat in Abwesenheit einer Belastung ist und (h1) die Höhe des flaumigen Materials (2) ist, nachdem eine Belastung von 200 g auf einer Platte (3) von einem Durchmesser von 4 cm auf das flaumige Material (2) aufgebracht worden ist.

**2.** Spieler für optische Platten nach Anspruch 1, dadurch *gekennzeichnet*, daß das flaumige Material (2) aus einer Feder (20) hergestellt worden ist.

**3.** Spieler für optische Platten nach Anspruch 1 oder 2, dadurch *gekennzeichnet*, daß die Reinigungsvorrichtung einen Träger (30) umfaßt, auf dem das flaumige Material (2) befestigt ist.

**4.** Spieler für optische Platten nach Anspruch 3, dadurch *gekennzeichnet*, daß der Träger (30) an einer Aufnahmevorrichtung (11) des Spielers angebracht ist.

Fig. 1

$h_0$

3

2

1

4

$h_1$

Fig. 2

11

13

14

10

Fig. 3

30

20

(a)

30

20

(b)

20

30

(c)